# EUROPÄISCHE PATENTANMELDUNG

(11) **EP 3 231 807 A1**
(43) Veröffentlichungstag der Anmeldung: **18.10.2017**
(21) Anmeldenummer: 16164818.3
(22) Anmeldetag: 12.04.2016
(51) Int. Cl.: C07F 7/04, C08G 77/02, C08K 5/5415

(54) **VERFAHREN ZUR HERSTELLUNG EINER 2-PROPYLHEPTYLSILIKAT-HALTIGEN ZUSAMMENSETZUNG**

(71) Anmelder: Evonik Degussa GmbH, 45128 Essen (DE)
(72) Erfinder: KRAFCZYK, Roland, 79618 Rheinfelden (DE); KÖPFER, Alexander, 79669 Zell im Wiesental (DE); MAYER, Stefanie, 79618 Rheinfelden (DE); STANDKE, Burkhard, 79540 Lörrach (DE)

(57) **Zusammenfassung**

Die vorliegende Erfindung betrifft ein Verfahren zur Herstellung einer 2-Propylheptylsilikat-haltigen Zusammensetzung, indem man Ethylsilikat mit einer im Überschuss eingesetzten Menge an 2-Propylheptanol in Gegenwart von Titantetrabutanolat als Katalysator unter Durchmischung auf eine Temperatur von kleiner gleich 220 °C erwärmt, reagieren lässt und im Anschluss an die Umsetzung Ethanol und überschüssiges 2-Propylheptanol durch Destillation aus dem Reaktionsgemisch entfernt und man das Produkt gewinnt.

## Beschreibung

Die vorliegende Erfindung betrifft eine Zusammensetzung mit einem sehr hohen Anteil an 2-Propylheptylsilikat sowie ein spezielles Verfahren zu deren Herstellung, wobei man Ethylsilikat in Gegenwart eines nicht sauren Katalysators mit 2-Propylheptan-1-ol (nachfolgend kurz 2-Propylheptanol) umestert und anschließend den freien Alkohol aus dem Reaktionsgemisch entfernt.

Polykieselsäurealkylester, auch Alkylsilikate genannt, können nach chemischem Verständnis unter anderem durch allgemeine Formeln wie RO-[(RO-)₂Si-O]ₙ-R sowie [-Si(-OR)₂O_{2/2}-]ₙ mit n>1 und R=Alkyl wiedergegeben werden und sind als solche lange bekannt, beispielsweise in Form von so genanntem Ethylsilikat.

DE-AS-1010739 lehrt die Herstellung von Polykieselsäureestern durch Umsetzung von Tetraethoxysilan mit höheren Alkoholen wie Cyclohexanol, Methylcyclohexanol sowie Phenolen in Gegenwart einer wasserfreien oder wässrigen Carbonsäure als Kondensationsmittel, beispielsweise Essig- oder Ameisensäure. Die bei der Umsetzung entstehenden flüchtigen Verbindungen, wie niederer Alkohol, wurden abdestilliert. Das Produkt ist säurehaltig.

US 2846459 offenbart die Herstellung bromierter Alkylsilikate durch Umesterung, wobei in den Beispielen von Polykieselsäureethylester ausgegangen und dieser u.a. mit einem Gemisch aus 2,3-Dibrompropan-1-ol und 2-Ethylhexanol umgesetzt wurde. Dabei kamen Natriummethanolat bzw. ein Gemisch aus Natriummethanolat und Kaliumcarbonat als Katalysator zum Einsatz. Auch hier wurden die nach der Umsetzung noch leicht flüchtigen Verbindungen, wie niederer Alkohol, abdestilliert und so entsprechende bromierte Alkylsilikate erhalten.

Aus Beispiel 7 der EP1035184A1 ist die Umsetzung von 100 g Ethylsilikat mit 18 g 2-Ethylhexanol in Gegenwart von Schwefelsäure als Katalysator zu entnehmen. Die Umsetzung erfolgte über 1 Stunde bei 120 °C. Die danach noch vorliegenden leicht flüchtigen Bestandteile wurden abdestilliert. Dabei wurde ein Alkylsilikat erhalten, das noch einen Gehalt von 94 Mol-% Ethyl und ein Molekulargewichtgewicht von 1750 g/mol aufwies. Hier erfolgte nur eine Teilumesterung mit geringer Ausbeute und das Produkt ist darüber hinaus aufgrund der eingesetzten und im Produkt verbleibenden Restmenge an Schwefelsäure sauer. Die Weiterverarbeitung des Produkts erfolgte in THF.

Der vorliegenden Erfindung lag daher die Aufgabe zugrunde, eine 2-Propylheptylsilikat-haltige Zusammensetzung einschließlich eines geeigneten Herstellverfahrens bereitzustellen, wobei
Ethylsilikat (Polykieselsäureethylester) mit 2-Propylheptanol in Gegenwart eines nicht sauren Katalysators mit möglichst hoher Ausbeute umgeestert werden soll.

Die gestellt Aufgabe wird erfindungsgemäß entsprechend den Merkmalen in den hier vorliegenden Ansprüchen vorteilhaft gelöst.

So wurde in überraschender Weise ein spezielles Verfahren zur Herstellung einer 2-Propylheptylsilikat-haltigen Zusammensetzung gefunden, indem man Ethylsilikat, einen dazu gewichtsbezogenen Überschuss an 2-Propylheptanol und eine katalytische Menge an Titantetrabutanolat zusammenbringt, das Eduktgemisch unter Durchmischung auf eine Temperatur von ≤ 220°C bei 1 bar (Umgebungsdruck), beispielsweise auf eine Temperatur von 150 - 220 °C, aufheizt, reagieren lässt und im Anschluss an die Umsetzung Ethanol und überschüssiges 2-Propylheptanol durch Destillation aus dem so erhaltenen Reaktions- bzw. Produktgemisch entfernt und man die erfindungsgemäße Zusammensetzung als Sumpfprodukt nach Destillation in hervorragender Ausbeute gewinnt. Darüber hinaus ist die erfindungsgemäße Zusammensetzung nicht sauer und enthält vorteilhaft einen Gehalt an 2-Propylheptylsilikat von ≥ 90 Gew.-% sowie einen Gehalt an freiem Ethanol von ≤ 1 Gew.-%, jeweils bezogen auf die Zusammensetzung.

Gegenstand der vorliegenden Erfindung ist somit ein Verfahren zur Herstellung einer 2-Propylheptylsilikat-haltigen Zusammensetzung, indem man Ethylsilikat mit einer im Überschuss eingesetzten Menge an 2-Propylheptanol in Gegenwart von Titantetrabutanolat als Katalysator unter Durchmischung auf eine Temperatur ≤ 220°C erhitzt, reagieren lässt und im Anschluss an die Umsetzung Ethanol und überschüssiges 2-Propylheptanol durch Destillation aus dem Reaktionsgemisch entfernt und man das Produkt gewinnt.

Vorteilhaft setzt man beim erfindungsgemäßen Verfahren Ethylsilikat und 2-Propylheptanol in einem Gewichtsverhältnis von 1 : 1,1 bis 10, bevorzugt 1 : 1,5 bis 5, besonders bevorzugt 1 : 3,4 ein.

Ferner setzt man beim erfindungsgemäßen Verfahren vorteilhaft 0,01 bis 0,5 Gew.-%, bevorzugt von 0,05 bis 0,2 Gew.-%, besonders bevorzugt 0,1 Gew.-%, Titantetrabutanolat, bezogen auf die eingesetzte Menge an 2-Propylheptylsilikat, ein.

Geeigneterweise führt man beim erfindungsgemäßen Verfahren die Umsetzung bei einer Temperatur von 150 bis 222 °C, bevorzugt von 170 bis 221 °C, besonders bevorzugt bei 200 bis 220 °C, und über einen Zeitraum von 12 bis 60 Stunden, bevorzugt von 16 bis 48 Stunden durch.

Im Allgemeinen führt man das erfindungsgemäße Verfahren wie folgt durch:
In der Regel legt man ein Gemisch aus Ethylsilikat und einem diesbezüglichen gewichtsmäßigen Überschuss an 2-Propylheptanol sowie einer katalytischen Menge an Titantetrabutanolat in einer geeigneten Reaktionsapparatur (zum Beispiel Reaktionsgefäß mit Zuführungen zur Eduktdosierung, Rührer, Heizung, Temperaturkontrolle/-regelung, Rückflusskühler und Brücke mit Vorlage) vor, erhitzt das Gemisch unter Rühren bevorzugt auf eine Temperatur knapp unterhalb des Siedebereichs von 2-Propylheptanol, insbesondere bei einer Temperatur im Bereich von 205 - 220 °C, lässt das Gemisch hinreichend lange reagieren, vorzugsweise von 12 bis 48 Stunden, und destilliert geeigneterweise anschließend die im so erhaltenen Reaktions- bzw.
Produktgemisch noch vorliegenden leicht flüchten Komponenten, wie Ethanol, sowie überschüssiges 2-Propylheptanol, geeigneterweise unter vermindertem Druck, ab, um das Reaktions- bzw.
Produktgemisch mittels Destillation aufzuarbeiten und so das Produkt zu gewinnen. Beispielsweise kann man zur Durchführung der Destillation das nach Umsetzung vorliegende Reaktions- bzw.
Produktgemisch aus dem Reaktionsgefäß in eine gesonderte Destillationseinheit überführen und mittels Destillation aufarbeiten. Darüber hinaus kann man bei der Destillation Vakuum anlegen, das heißt, unter vermindertem Druck destillieren und fakultativ zusätzlich Stickstoff durch das im Sumpf der Destillationsapparatur befindliche Produkt bzw. Produktgemisch leiten. Das Produkt, die erfindungsgemäße Zusammensetzung, gewinnt man somit vorteilhaft als farblos bis gelbliche, leicht viskose Flüssigkeit im Sumpf der verwendeten Destillationsapparatur.

Überraschend erzielt man bei der Durchführung des erfindungsgemäßen Verfahrens in besonders vorteilhafter Weise eine nahezu vollständige Umesterung mit einer Ausbeute von ≤ 95 % und ist somit in die günstige Lage versetzt, ein entsprechendes Reaktionsprodukt bereitstellen zu können und nach dem erfindungsgemäße Verfahren vorteilhaft eine Zusammensetzung mit einem hohen Gehalt an 2-Propylheptylsilikat von ≤ 90 Gew.-%, bevorzugt ≥ 95 Gew.-%, zu erhalten.

Gegenstand der vorliegenden Erfindung sind daher auch Zusammensetzungen mit einem Gehalt an 2-Propylheptylsilikat von ≤ 90 Gew.-%, bevorzugt ≥ 95 Gew.-%, die gemäß dem erfindungsgemäßen Verfahren erhältlich sind.

Weiter ist Gegenstand der Erfindung eine Zusammensetzung bzw. erfindungsgemäß hergestellte Zusammensetzung mit einem Gehalt an 2-Propylheptylsilikat von ≤ 90 Gew.-% bevorzugt ≥ 95 Gew.-%, bezogen auf die Zusammensetzung. Darüber hinaus weist eine erfindungsgemäße Zusammensetzung bzw. erfindungsgemäß hergestellte Zusammensetzung bevorzugt einen Gehalt an Ethanol von ≤ 1 Gew.-%, bevorzugt ≥ 0,5 Gew.-% bis hin zur Nachweisgrenze, bezogen auf die Zusammensetzung, auf und zeichnet sich somit auch aus ökologischer Sicht zusätzlich durch einen nur sehr geringen Anteil an VOC (Volatile Organic Compounds = Flüchtige Organische Verbindungen) aus.

So können erfindungsgemäße Zusammensetzungen zum Beispiel -aber nicht ausschließlich- als Kopplungsreagenz bei der Herstellung von funktionellen Polymeren, wie Butadienkautschuk oder bei Lösungs-Styrol-Butadien-Kautschuk, vorteilhaft eingesetzt werden.

Die vorliegende Erfindung wird durch die nachfolgenden Beispiele näher erläutert, ohne den Gegenstand der Erfindung zu beschränken:

### Beispiele:

### Verwendete Chemikalien:

Dynasylan® 40 (Ethylsilikat), Evonik Resource Efficiency GmbH Titantetrabutanolat, Sigma-Aldrich 2-Propylheptanol, Evonik Performance Materials GmbH

### Analytische Methoden:

### NMR-Messungen:

Instrument: Bruker
Frequenz: 100,6 MHz (¹³C-NMR)
Scans: 1024 (¹³C-NMR)
Temperatur: 296 K
Lösungsmittel: CDCl₃
Standard: Tetramethylsilan

### Gaschromatographische Bestimmung von Alkohol:

Alle Angaben verstehen sich als Richtwerte. Säulen von ähnlicher Polarität z.B. von anderen Herstellern sind zugelassen. Ist die Trennung nachweislich auch mit einem Gerät mit gepackter Säule erreichbar, ist auch dieses zugelassen.

Bei der Handhabung der Proben ist deren Feuchtigkeitsempfindlichkeit zu beachten.

| | | |
|---|---|---|
| Gerät: | Kapillar-Gaschromatograph mit WLD und Integrator | |
| | z.B. HP 5890 mit Integrator HP 3396 | |
| Trennsäule: | Kapillarsäule | |
| | Länge: | 25 m |
| | innerer Durchmesser: | 0,20 mm |
| | Filmdicke: | 0,33 mm |
| | stationäre Phase: | HP Ultra 1 |
| Temperaturen: | Säulenofen: | 120 °C - 2 min - 10 °/min - 275 °C - 8 min |
| | Injektor: | 250 °C |
| | Detektor: | 280 °C |
| Trägergas: | Helium | |
| | Strömung: | ca. 1 ml/min |
| | Split-Verhältnis: | ca. 1:100 |
| Injizierte Probe: | 0,4 ml | |

Auswertung erfolgt durch Normierung auf 100 Flächen-%.

### Beispiel 1:

Es wurden Dynasylan® 40 (300 g), 2-Propylheptanol (1030 g) und Titantetrabutanolat (300 µl, 0,1 Gew.-% bezogen auf Dynasylan® 40 vorgelegt und unter Rühren auf 200 °C erwärmt. Dabei entstandenes Ethanol wurde über eine Destillationsbrücke aus dem Reaktionsgemisch entfernt. Es wurde 24 h bei dieser Temperatur gerührt, dann wurde bei Atmosphärendruck 2-Propylheptanol (Siedebereich 205-220 °C) abdestilliert. Der restliche freie Alkohol wurde bei vermindertem Druck (1 mbar, 200 °C) entfernt. Als Umsetzungsprodukt (801 g) wurde eine leicht gelbliche, leicht viskose Flüssigkeit erhalten. Das Umsetzungsprodukt wurde mittels ¹³C-NMR analysiert. Die Analyse belegt, dass als Umsetzungsprodukt ein 2-Propylheptylsilikat erhalten wurde.

Die Umesterungsausbeute betrug 98 %, d. h. 98 % der Ethoxy-Gruppen des eingesetzten Ethylsilikats wurden erfindungsgemäß durch 2-Propylheptyloxy-Gruppen ersetzt bzw. umgeestert.

¹³C-NMR (100 MHz, CDCl₃): δ = 65.9-66.5 (m, 1C), 39.7-40.1 (m, 1C), 32.9-33.5 (m, 1C), 32.3-32.7 (m, 1C), 30.6-31.1 (m, 1C), 26.4-26.9 (m, 1C), 22.6-23.0 (m, 1C), 19.8-20.3 (m, 1C), 14.4-14.7 (m, 1C), 14.1-14.3 (m, 1C) ppm.

## Patentansprüche

1. Verfahren zur Herstellung einer 2-Propylheptylsilikat-haltigen Zusammensetzung, indem man Ethylsilikat mit einer im Überschuss eingesetzten Menge an 2-Propylheptanol in Gegenwart von Titantetrabutanolat als Katalysator unter Durchmischung auf eine Temperatur kleiner gleich 220°C erhitzt, reagieren lässt und im Anschluss an die Umsetzung Ethanol und überschüssiges 2-Propylheptanol durch Destillation aus dem Reaktionsgemisch entfernt und man das Produkt gewinnt.

2. Verfahren nach Anspruch 1,
wobei man Ethylsilikat und 2-Propylheptanol in einem Gewichtsverhältnis von 1 : 1,1 bis 10 einsetzt, bevorzugt von 1 : 1,5 bis 5, besonders bevorzugt 1 : 3,4.

3. Verfahren nach Anspruch 1 oder 2,
wobei man 0,01 bis 0,5 Gew.-% Titantetrabutanolat, bezogen auf die eingesetzte Menge an Ethylsilikat, einsetzt, bevorzugt von 0,05 bis 0,2 Gew.-%, besonders bevorzugt 0,1 Gew.-%.

4. Verfahren nach einem der Ansprüche 1 bis 3,
wobei man die Umsetzung bei einer Temperatur von 150 bis 222 °C durchführt, bevorzugt von 170 bis 221 °C, besonders bevorzugt bei 200-220 °C.

5. Verfahren nach einem der Ansprüche 1 bis 4,
wobei die Umsetzung über einen Zeitraum von 12 bis 60 Stunden durchführt, bevorzugt von 12 bis 48 Stunden.

6. Verfahren nach einem der Ansprüche 1 bis 5,
wobei man die Umesterung mit einer Ausbeute von ≤ 95 % durchführt.

7. Verfahren nach einem der Ansprüche 1 bis 5,
wobei man ein Reaktionsprodukt mit einem Gehalt an 2-Propylheptylsilikat von ≤ 90 Gew.-% erhält, bevorzugt ≥ 95 %.

8. Zusammensetzung mit einem Gehalt an 2-Propylheptylsilikat von ≤ 90 Gew.-% erhältlich nach einem der Ansprüche 1 bis 7.

9. Zusammensetzung nach Anspruch 8 mit einem Gehalt an 2-Propylheptylsilikat von ≤ 90 Gew.-%, bevorzugt ≥ 95%.

10. Zusammensetzung nach Anspruch 8 oder 9 mit einem Gehalt an Ethanol von ≤ 1 Gew.-%, bezogen auf die Zusammensetzung, bevorzugt ≤ 0,5 Gew.-%.
